# EUROPEAN PATENT APPLICATION

(11) **EP 2 511 635 A1**
(43) Date of publication of application: **17.10.2012**
(21) Application number: 12002586.1
(22) Date of filing: 12.04.2012
(51) Int. Cl.: F26B 3/347, F26B 17/14, B29B 9/16

(54) **Drying, dehumidifying apparatus of the microwave type for the rapid and continuous drying of plastic material, e.g. granules, pellets or flakes, for feeding an injection or extrusion moulding system**

(30) Priority: 13.04.2011 IT TV20110050
(71) Applicant: SMC TECHNOLOGY S.R.L., 31100 Treviso (IT)
(72) Inventor: Pagotto, Amedeo, 31027 Spresiano (TV) (IT)
(74) Representative: Osti, Biancamaria

(57) **Abstract**

Drying, dehumidifying apparatus (10), of the microwave type for the rapid and continuous drying of plastic material, in granules, pellets or flakes, for feeding an injection or extrusion moulding system of products in plastic material. The apparatus (10) comprising a container body (100) of a tower-like cylindrical shape, whose upper part by means of a mouth (111) is used to load the plastic material. Coaxially with respect to said container body is placed a vertical rotating shaft (200) for mixing plastic material. Peripherally with respect to said container body (100) some microwave generating devices (300,310) are mounted. The lower part of said container body is provided with an ambient air heater device (400) in such a way that the air introduced into said heater device (400), is first heated, then crossing a sintered filter (420), dehumidified introduced in correspondence of the base of said container body (100) in the container body (100) itself of said plastic material. Sensor means of product presence (500), of material temperature (510) and control, of process air temperature after the heater device, interact, provide data to a control logic unit of said apparatus (10).

## Description

The object of the present invention finds particular, although not exclusive, application in the field of the line treatment of plastic material granules, pellets and flakes, to be used in the processes subsequent to the moulding of products in plastic material.

### Field of the invention

Conventionally the moulding lines of plastic material, upstream of the system, must include some quality control systems of the raw material, as a guarantee for the production cycle, in such a way as to preventively detect the presence of residual humidity, with which the raw material has been previously enriched during the packaging and storage phases.

The aim of the drying systems that usually assist the systems for moulding products of plastic material, better known as dryers, is, therefore, to constantly control the percentage of humidity of the raw material used and to act effectively if required, in order to feed the downstream moulding system only with dried, therefore optimized, product maintaining a high processing quality.

In principle, one can agree on the fact that the dryers are made up essentially of a hot air generator and of a hopper containing the granule to be dried. Dryers of the usual type use normal ambient air that has a dew point variable depending on environmental conditions. The operation of a conventional dryer requires that the air sucked by the blower through the filter is pushed into the heating chamber and sent into the hopper that contains the plastic material in granules through the delivery pipe. Temperature is controlled by the thermostat. The hot air, distributed by the diffuser, crosses the granule and removes its humidity. Through the pipe, the air gets to the distribution box, where a diverter valve allows air circulation in a semi-open or open circuit. If on the one side the visible flaws that can be found in non-hygroscopic and non-degradable hygroscopic materials can also be tolerated, on the other side the invisible and functional flaws that can be found in degradable hygroscopic materials, transformed with intolerable residual humidity, cannot certainly be. Therefore, it is evident that the use of normal ambient air dryers is limited and will depend in any case on the percentage of humidity of the air detected at the moment.

Just as known are dehumidification systems, which, unlike dryers, substantially have the aim of eliminating humidity from process air.

### Prior art

Thanks to short - although not in-depth - research within the technical sector of reference, a series of documents have been found. More particularly:
JP7039716 (Katayama) describes an apparatus provided with channels, which are affected by a beam of microwaves, generated by a suitable device. Moreover, a fan also cooperates, which introduces an air flow at controlled temperature that crosses the mass of pellets.
US2004/0200090 (Tu et al.) suggests a dryer for plastic, inside which in a corresponding container there is a magnetic control pipe. The magnetic control pipe is connected to a connection pipe which is provided at one end with an air filter, and at the other is connected to a ventilation pipe. The dried plastic is used by an apparatus for injection moulding.
JP4080005 (Nakagome) describes an apparatus for plastic moulding, in which a high pressure dehumidifier is provided. The hopper of a dryer is equipped with a dehumidifier that provides dehumidified high pressure air in such a way that the pellets that are introduced into the dryer are dehumidified by a hot air flow. A moulding apparatus integrates said dryer-dehumidifier.
JP63231908 (Nakagome) proposes a dryer for plastic in pellets. In this case, the pellets feed a drying cylinder where a microwave generator and an aspirator act. The condensate generated and evaporated inside the drying cylinder is extracted by the aspirator.
JP63216711 (Nakagome) provides an apparatus like the previous placed upstream of a line for moulding products in plastic material.
JP63231909 (Nakagome) finally provides a drying apparatus that considers some pellets which feed a drying cylinder where a microwave generator and an aspirator act. The condensate generated and evaporated inside the drying cylinder is extracted by the aspirator. Inside the cylinder some dehumidified air is provided, which once enriched with humidity is dehumidified and re-introduced into the drying cylinder.
IT1358667 (Pagotto) describes a continuous apparatus for the rapid dehumidification of bulk materials, particularly of pellets for moulding system of plastic materials, consisting of:
   - a first vertical container for containing some pellets to be treated;
   - a second container, orthogonal and in communication with said first container of treatment of the pellet, with fluidized bed and longitudinal Archimedean screw, in correspondence of which some microwave generators act;
   - a circuit for the distribution of an air flow at controlled temperature and dehumidified inside said second container;
   - means for sucking the air flow at controlled temperature and enriched with humidity from inside said second container, for said air flow to be then dehumidified and reintroduced into said second container;
   - sensor means for detecting the temperature and the percentage of humidity present in the pellet at least in said second container.
US2008060212 (Cattapan) describes a process for drying plastic material in granules, in which there is provided an irradiation phase of the granules with microwaves, during which the granules are conveyed by gravity towards a hopper through the field of action of the microwave source.
EP0814311 (Rohr) proposes a drying method, as well as of crystallization of plastic material which can be fed by using microwaves. A horizontal line advancing system of the material to be treated, fed by gravity and in correspondence of the upper part of said advancing line two or more magnetrons.
EP0437267 (Nakagomi) through a hopper an underlying unit is fed, which is suitable to contain plastic material in granules. Some air is introduced laterally into said container of plastic material and a microwave generator is placed between the loading hopper and said underlying container.
JP1058512 (Nagakome) In order to rapidly make the drying of a large amount of pellets uniform, some small drying chambers are provided each equipped with a magnetron, said small chambers connected by gravity to a corresponding large hopper, in such a way as to transfer the dried pellets from each small container to the hopper.
US4023279 (Janda) A vertical dryer for resins suitable to be injection moulded. It comprises a hopper, means suitable to determine a forced air circulation inside the hopper, and a microwave generator.

To conclude, summarizing the so acquired information one can reasonably consider as known:
(a) apparatus for the continuous drying/dehumidification of plastic material in granules, pellets, made up of a hopper that is perpendicularly connected to one side of an underlying orthogonal tunnel, with a horizontal linear path of the plastic material in granules;
(b) apparatus for the continuous drying of plastic material in granules, pellets, made up of a hopper that in its lower part is connected to a container, with a substantially linear horizontal path of the plastic material in granules, said path being peripherally affected by a microwave generator;
(c) drying apparatus of the type (a; b) that for the treatment of the material employ generators of a hot air flow with convective motion; or still apparatus that employ generators of a hot air flow with convective motion supported by the action of microwave devices placed in the peripheral area with respect to the path of the material to be treated.

### Drawbacks

In principle, according to the applicant it seems that the drying apparatus with vertical development with microwave generator and convective motion for treating plastic material in granules, of the type described in US4023279 (Janda), JP1058512 (Nagakome), or US2008060212 (Cattapan) does not to allow a correct agitation of the material so as to make it fluid in order to allow a rapid, uniform and complete drying. More particularly, these apparatus are not suitable for the treatment of plastic material in the form of flakes, because, where there is amorphous material, the latter because of the temperatures, it usually tends to get packed with the consequence that the air flow, the convective motion from the bottom upwards, is prevented from vertically crossing the hopper, by the so packed material, proving to be an absolutely ineffective treatment.

A second drawback is due to the fact that the drying process, because of the positioning of the microwave generators, can prove to be incomplete and in any case requires particularly long drying times. For example in US4023279 (Janda), JP1058512 (Nagakome), or US2008060212 (Cattapan) the microwave action substantially affects the upper part of the hopper, disregarding the lower portion, whose so contained plastic material however tends, proportionally to the time of stay, to reload with more or less significant humidity percentages, altering the working process downstream of the moulding line.

A third drawback can be referred to the fact that the known solutions but of the type with horizontal development, do not allow to easily apply the dryer over conventional presses, and in case drying apparatus of the type with vertical development, also known as towers, are installed, they are particularly complex and of excessive size such as to hinder in an effective way the positioning always with respect to the press, particularly in the case of installations that are not state of the art.

As for the solutions of apparatus with horizontal development, for example JP4080005 (Nakagome) or JP63231908 (Nakagome) the use of the air flow only, which circulates with a closed circuit and at controlled temperature, inside the container of the pellets themselves, seems to be insufficient. It is also possible to affirm that the problem that has been dealt with synthetically above would seem at least partially solved by JP63231908 (Nakagome), US2004/0200090 (Tu et al.), JP63231909 (Nakagome) and even more with ITTV2005A000041 (smc), this because the interaction of a microwave generator is provided, which by investing the mass of pellets contributes together with the controlled air flow to obtaining a faster and more effective drop in the percentage of humidity, and yet they are unsuitable to be used in some types of presses.

Finally, the applicant believes that the solutions of known vertical or tower drying apparatus are not completely optimized yet. In other words, they do not allow to achieve excellent results in terms of percentage capacity of drop in the humidity present in the plastic material granules and they are not suitable for the universal treatment of the plastic material granules.

Also because of these drawbacks, there is the need for the firms of the sector, and in particular for the firms that need said apparatus for moulding plastic materials, to find at least more effective solutions.

The aim of this invention is also to avoid the above-mentioned drawbacks.

### Short description of the invention

This and other aims are achieved by the present invention according to the characteristics as in the included claims, solving the above-mentioned problems by means of a drying, dehumidifying apparatus, with vertical development of the microwave type for the rapid and continuous drying of plastic material, in granules, pellets or flakes, for feeding an injection or extrusion moulding system of products in plastic material, of the type consisting of a container body of the plastic material essentially of a tower-like cylindrical shape, whose upper part by means of a mouth is used to load the plastic material. Coaxially with respect to said container body is placed a vertical rotating shaft for mixing plastic material and peripherally with respect to said container body some microwave generating devices, and in which the lower part of said container body is provided with an ambient air heater device in such a way that the air introduced into said heater device, is first heated, then crossing a sintered filter, dehumidified introduced in correspondence of the base of said container body in the container body itself of said plastic material. Sensor means of product presence, of material temperature and control, of process air temperature after the heater device, interact, provide data to a control logic unit of said apparatus.

### Aims

In this way, by the considerable creative contribution the effect of which constitutes an immediate technical progress, various advantages and aims are achieved.

A first aim was to realize an apparatus for the drying and dehumidification of the plastic material, in granules, pellets or flakes, extremely functional, able to offer as a whole some high performances up to a ratio of about 1/6 with respect to the conventionally adopted solutions, and in particular, in terms of treatment times and able to get below the conventional thresholds of residual humidity in the treated plastic material, qualitatively improving the finished product.

A second aim was to realize a universal apparatus for drying and dehumidifying plastic material, in particular for treating flakes without the latter tending to get packed in the lower part of said apparatus. The processing of the flakes is particularly interesting for the firms of the sector considering the fact that the material with respect to the usual plastic material in granules is cheaper.

A further aim of the apparatus of the present invention consists of its tower configuration, which makes it of reduced size and easily installable in small working environments that use presses that are not state of the art.

Unlike the known and closer tower solutions such as US4023279 (Janda), JP1058512 (Nagakome), or US2008060212 (Cattapan) the field of action of the microwave generators for the drying/dehumidification cycle regards more the lower part of the apparatus, while the upper part is controlled in the process as a crystallization phase of the plastic material. Furthermore, US4023279 (Janda), JP1058512 (Nagakome), or US2008060212 (Cattapan) do not provide any mixing device, presumably due to the fact that the gravity itself of the material and the fluidization by effect of the convective motion only would not require it, however it has been observed that in the case of the treatment of the flakes, like in the solution of the present invention, it is necessary. It is not even suggested by the solutions of dryers/dehumidifiers with horizontal development, this because the Archimedean screw, axial with respect to the container body, has the main task of advancing the material rather than to mix it, also considering that the underlying fluidized beds already accomplish this function. In the present invention the action of the product mixing shaft, with respect to what is described in EP0437267 (Nakagomi), develops for the entire height of the apparatus from the top, in correspondence of the mouth, up to the lower part of the container body where is the outlet of the treated plastic material. It is true that EP0437267 (Nakagomi) suggests a central mixer, however it does not extend over the entire height of the container of the plastic material in granules and does not provide a vertical distribution of the microwave generators in such a way as to make the treatment uniform along the whole containment column of the plastic material.

A further aim was to obtain a versatile apparatus not particularly complex, which does not need particular maintenance, as well as of reduced size and consumption.

These and other advantages will appear from the following detailed description of a preferred embodiment with the aid of the enclosed schematic drawing, whose details are not to be considered limitative but only illustrative.

### Content of the drawings

Figure 1 is a side view of the drying and dehumidifying apparatus with vertical development of the present invention;
Figure 2 is a cross-section side view of the apparatus of Figure 1;
Figure 3 is a longitudinal section view of the apparatus of Figure 1;
Finally, Figure 4 is a cross-section plan view of the apparatus of Figure 1.

### Practical embodiment of the invention

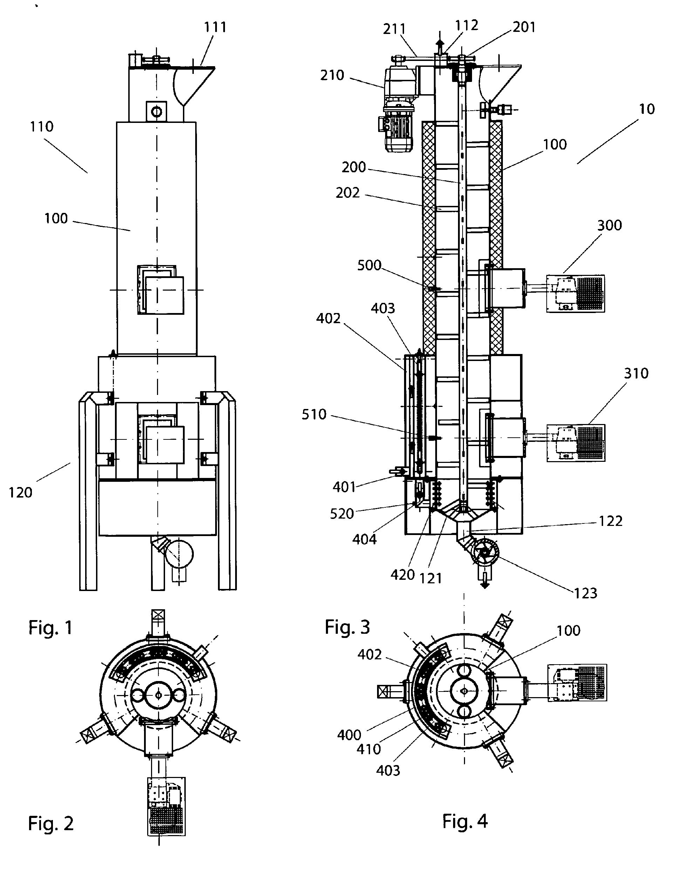

The drying and dehumidifying apparatus (10) of plastic material in granules, pellets or flakes, according to the present invention, consists of a container body (100), supported by supporting legs, of essentially cylindrical shape with vertical development, with an upper portion (110) and a lower portion (120). In principle, the subdivision of the apparatus (10) into two different parts between said upper portion (110) and lower portion (120) with respect to the apparatus (10) can be in a ratio of about half of the total height of said apparatus (10) (Fig. 1). In the upper portion (110) of the apparatus (10) in a treatment cycle of the plastic material, a phase substantially of crystallization of said plastic material is carried out, while in the lower portion (120) a dehumidification phase is carried out.

On the top of the upper portion (110) (see Fig. 3) of the container body (100) the loader connection (111) is obtained for loading the material to be treated, in particular plastic material in granules, pellets or flakes. Always on the top of the upper portion (110) of the container body (100), in a central position, is hinged the upper end (201) of the vertical mixing shaft (200) of the material, said vertical mixing shaft (200) radially includes some mixing blades (202) that are positioned at different heights along the entire vertical extension of the vertical mixing shaft (200). The movement of said vertical mixing shaft (200) is ensured by a gearmotor assembly (210) which is external with respect to said container body (10) close to the upper portion (110) of the container body (100) in such a way as to move by means of connection members (211) said upper end (201) of the vertical mixing shaft (200). Still, always in correspondence of said top of the upper portion (110) there is an outlet exhaust (112) of process air towards the filtering.

In a position that corresponds about to the area of subdivision between the upper (110) and lower (120) portion of the apparatus (10), there is perpendicularly a first microwave source (300), for example a magnetron, which generates microwaves inside the container body (100). At least one second microwave source (310) that generates microwaves inside the container body (100) is vertically aligned with respect to said first source (300) and placed at a lower height, in such a way as to affect the lower portion (120) of said apparatus (10).

At least one heater device (400) is obtained in correspondence of the lower portion (120) of the apparatus (10) for a closed recirculation dehumidified and regenerated ambient air flow. Said heater device (400) is wound at least partially for an arc portion smaller than or equal to 180° around the container body (100) (Fig. 4), and is placed in such a way as to result diametrically opposed with respect to the second microwave source (310). Even more in particular, said heater device (400) essentially comprises two interspaces, a first interspace (402) that is accessed through the mouth (401) and through which process ambient air is introduced. Therefore, the process ambient air is heated inside a second interspace (403), with respect to which, vertically, the heater elements, for example some resistors (410), are placed. The path of the hot process air flow, therefore, continues from the base of the interspace (403) through a collector (404) towards an at least side filter in sintered material (420) to be re-introduced laterally into the container body (100) close to the drawn bottom (121).

The drawn bottom (121) of the lower portion (120) in the container body (100) is centrally provided with an exhaust manifold (122) that, by means of a rotary valve (123), feeds the downstream moulding system. Finally, at least one presence sensor (500), placed at about half the height of the container body (100), is suitable to detect the presence of the plastic material inside the container body (100). At least one temperature probe (510) placed in correspondence of the lower portion (120) of the container body (100) close to the heater device (400) is suitable to detect the temperature of control of the treated plastic material. Finally, at least one air temperature probe (520) is placed in correspondence of the collector (404) in such a way as to allow the control of the process air after the heater. Said sensor means, (500, 510, 520) are connected to each other in such a way as to provide the control logic unit with the information necessary for the execution and control of the process.

### Reference

- (10): drying and dehumidifying apparatus
- (100): container body
- (110): upper portion
- (111): loader connection
- (112): outlet exhaust
- (120): lower portion
- (121): drawn bottom
- (122): exhaust manifold
- (123): rotary valve
- (200): vertical mixing shaft
- (201): upper end
- (202): mixing blades
- (210): gearmotor assembly
- (211): connection members
- (300): first microwave source
- (310): second microwave source
- (400): heater device
- (401): air inlet
- (402): first interspace
- (403): second interspace
- (410): resistors
- (404): collector
- (420): side filter in sintered material
- (500): plastic material presence sensor
- (510): plastic material temperature probe
- (520): air temperature probe

## Claims

1. Drying, dehumidifying apparatus with vertical development of the microwave type for the rapid and continuous drying of plastic material, in granules, pellets or flakes, for the feeding of an injection or extrusion moulding system of products in plastic material, which comprises a vertical container body (100) of cylindrical shape of the plastic material in granules, pellets or flakes, whose top has a loading mouth (111) of the plastic material and a bottom (121) provided with an exhaust manifold (122) that, by means of a rotary valve (123), feeds the downstream moulding system, **characterised in that** coaxially with respect to said container body (100) is a vertical rotary shaft (200) for mixing plastic material and with peripherally with respect to said container body (100) microwave generator devices (300, 310), and wherein the lower portion (120) of said apparatus (10) has an air heater device (400) in such a way that the process ambient air introduced into said heater device (400) is first heated, then crossing at least one sintered filter (420), dehumidified introduced in correspondence of the lower portion (120) into the container body (100) of said plastic material, and wherein sensor means (500, 510, 520) of product presence, of material temperature and control, of process air temperature after the heater device, interact, in such a way as to provide data to a control logic unit of said apparatus (10).

2. Drying apparatus, according to claim 1, **characterised in that** said apparatus (10) comprises an upper portion (110) and a lower portion (120) each of which with respect to the apparatus (10) is in a ratio of about half the total height of said apparatus (10), in such a way that in a treatment cycle of the plastic material in the upper portion (110) of the apparatus (10) a phase of crystallization of said plastic material is carried out, while in the lower portion (120) a dehumidification phase is carried out.

3. Drying apparatus, according to claims 1 and 2, **characterised in that** in correspondence of the lower portion (120) of the apparatus (10) there is perpendicularly a first microwave source (300) that generates microwaves inside the container body (100), and wherein at least one second microwave source (310) that generates microwaves inside the container body (100) is vertically aligned with respect to said first source (300) and placed at a lower height.

4. Drying apparatus, according to the previous claims, **characterised in that** in correspondence of the lower portion (120) of the apparatus (10) at least one heater device (400) is obtained, for a closed recirculation dehumidified and regenerated ambient air flow, said heater device (400) being wound at least partially for an arc portion smaller than or equal to 180° around the container body (100) and being placed in such a way as to be diametrically opposed with respect to the second microwave source (310) and comprising a first interspace (402) which is accessed through the mouth (401) and through which process ambient air is introduced, said process ambient air being heated inside a second interspace (403), with respect to which, vertically, the heater elements (410) are placed, and then continuing from the base of the interspace (403) through a collector (404) towards an at least side filter in sintered material (420) to be re-introduced laterally into the container body (100) close to the drawn bottom (121).
